# EUROPÄISCHE PATENTSCHRIFT

(11) **EP 1 797 399 B1**
(45) Veröffentlichungstag und Bekanntmachung des Hinweises auf die Patenterteilung: **30.08.2017**
(21) Anmeldenummer: 05792002.7
(22) Anmeldetag: 29.09.2005
(51) Int. Cl.: G01D 5/14, G01D 5/16, G01D 5/245, G01D 5/249

(54) **MAGNETISCHER ABSOLUTPOSITIONSSENSOR MIT VARIIERENDER LÄNGE DER EINZELNEN KODIERUNGSSEGMENTE**
MAGNETIC ABSOLUTE POSITION SENSOR FEATURING A VARIABLE LENGTH OF THE INDIVIDUAL ENCODING SEGMENTS
DISPOSITIF DE MESURE DE LA POSITION ABSOLUE D'AU MOINS DEUX CORPS DEPLAÇABLES OU MOBILES EN ROTATION L'UN PAR RAPPORT A L'AUTRE

(30) Priorität: 30.09.2004 DE 102004048198; 29.09.2005 DE 102005046822
(43) Veröffentlichungstag der Anmeldung: 20.06.2007
(73) Patentinhaber: Continental Teves AG & Co. oHG, 60488 Frankfurt am Main (DE)
(72) Erfinder: BURGDORF, Christian, 63075 Offenbach (DE); RINK, Klaus, Rodenbach 63517 (DE); ANTONI, Henrik, 60598 Frankfurt (DE); ALBRECHT, Veith, 63150 Heusenstamm (DE); HICKL, Frank, 63571 Gelshausen (DE)
(86) Internationale Anmeldenummer: PCT/EP2005/054897
(87) Internationale Veröffentlichungsnummer: WO 2006/035055

(56) Entgegenhaltungen:
- DE-A1- 10 010 042
- DE-A1- 10 020 764
- DE-A1- 10 333 486
- DE-A1- 19 754 524
- US-A- 4 757 244
- US-A1- 2004 100 251
- US-A1- 2004 173 735

## Beschreibung

Die Erfindung betrifft eine Messvorrichtung zur Messung der Absolutposition mindestens zweier relativ zueinander verschiebbarer oder drehbarer Körper zueinander.

In der Technik sind verschiedene Möglichkeiten zum berührungslosen Messen von Positionen und Wegen zweier relativ zueinander beweglicher Bauteile bekannt. Diese setzen sich in der Regel aus einem Signalgeber oder Maßstab, der auf einem der Bauteile montiert ist, und einem Sensor oder Lesekopf, der diesen Impulsgeber abtastet und auf dem anderen Bauteil montiert ist, zusammen. Die Abtastung kann beispielsweise über Licht- oder Hochfrequenzsignale, elektrische oder magnetische Felder erfolgen. Als Impulsgeber sind unter anderem Lochscheiben, Zahnräder und magnetische Strukturen bekannt.

Beispielsweise können mittels magnetisch codierten Scheiben, Ringen oder flachen Streifen aus magnetisierbarem Material, so genannten Encodern, unter Verwendung von Magnetfeldsensoren Wegunterschiede erfasst werden. Durch die Änderung des Magnetfeldes in Größe oder Richtung, hervorgerufen durch eine relative Verschiebung des Encoders und der Sensorelemente, lässt sich dabei auf Richtung und Größe der Bewegung schließen.

Bei der Ausgestaltung derartiger Anwendungen ist es grundsätzlich wünschenswert, signaltechnisch verlässliche und reproduzierbare Messwerte generieren zu können, und andererseits möglichst preisgünstige Lösungen zu realisieren.

In der Kraftfahrzeug-Technik werden an derartige Messsysteme zusätzliche Anforderungen gestellt, weil die Anwendungen beispielsweise gegenüber der Beschleunigung und Erschütterungen des Kraftfahrzeuges sowie hohen Temperaturschwankungen unempfindlich sein müssen und allgemein eine hohe Zuverlässigkeit und Genauigkeit aufweisen sollten. Außerdem besteht meist die Notwendigkeit, dass die Funktionsfähigkeit von Messsystemen auch bei starker Verschmutzung erhalten bleiben soll. Aufgrund dieser Anforderungen haben sich in der Kraftfahrzeugtechnik auf Magnetfeldern basierende Sensoren zum Messen geometrischer Größen als besonders vorteilhaft dargestellt. Insbesondere können sie als Sensoren zum Messen der Raddrehzahl, der Drosselklappenstellung oder des Pedalwegs eingesetzt werden.

In der WO 01/51893 ist ein Konzept offenbart, mit dem ein Wegunterschied durch einen linearen Wegsensor erfasst und in Form eines elektrischen Ausgangssignals ausgegeben werden kann. In dieser Schrift sind axial zueinander versetzte, einen stabförmigen Encoder abtastende Sensorelemente beschrieben, die ein zueinander phasenverschobenes Signal erzeugen.

Aus DE 10020764 ist eine Anordnung eines magnetischen Encoders bekannt, welcher auf einer Kolbenstange eines Schwingungsdämpfers montiert ist und, vor Verschleiß -bedingt durch die Reibung der Kolbenstange relativ zur Führungs-/ Dichtungseinheit- durch eine Schicht geschützt, sich relativ zu einer in Nähe der Führungs-/Dichtungseinheit befindlichen Sensorelements bewegt, welches die eingeprägte magnetische Codierung abtastet.

Allerdings liefert die Schrift keinen Hinweis, wie das angegebene Element Sensor und die Magnetisierung des Encorders unter praxisrelevanten Bedingungen, wie sie beispielsweise im Kraftfahrzeug vorliegen, ausgeführt werden müssen, um eine Position mit nur einem Sensor zu erfassen.

Bei den genannten Konzepten ist zum Messen von Bewegungen nur eine Skala notwendig. Insbesondere kann ein streifenweise magnetisierter Encoder oder Maßstab durch einen magnetoresistiven Sensor abgetastet werden, um die Positionsverschiebung eines Bremspedals zu erkennen. Nachteilig an einer derartig konzipierten Messvorrichtung ist jedoch, dass sich ein Absolutwert der Position des verschiebbaren Körpers nur mit erheblichem Einwand insbesondere unter Verwendung mehrerer Encoder oder dergleichen ermitteln lässt. US 4,757,244 und DE 19754524 offenbaren beide Absolutpositionssensoren. Aus der EP 1 157 256 B1 ist hingegen ein System bekannt, mit dem unter gewissen, einschränkenden Voraussetzungen eine Absolutpositionsmessung ermöglicht werden soll. Dazu ist in diesem System ein magnetisierter Maßstab oder Encoder vorgesehen, der schraubenartig magnetisiert ist, so dass in Längsrichtung des Encoders gesehen der Winkel der Magnetisierungsrichtung ortsabhängig stetig und kontinuierlich quadratisch mit der Ortskoordinate zunimmt. Gerade im Hinblick auf die gewünschte Zuverlässigkeit und die für die Genauigkeit der Messergebnisse erforderliche Präzision bei der Einstellung Magnetisierung ist die Herstellung derartiger Systeme aber insbesondere im Hinblick auf den Materialbedarf vergleichsweise aufwendig. Bei der genannten Meßanordnung ist außerdem eine präzise Führung der gegeneinander bewegten Teile erforderlich.

Der Erfindung liegt daher die Aufgabe zugrunde, eine Messvorrichtung der oben beschriebenen Art anzugeben, mit der sich bei besonders gering gehaltenem Herstellungsaufwand die Absolutposition eines verschiebbaren Körpers zuverlässig ermitteln lässt. Weiterhin soll ein Verfahren zur Ermittlung der Absolutposition angegeben werden.

Bezüglich der Messvorrichtung wird diese Aufgabe gelöst, indem die Position eines verschiebbaren Körpers über mindestens zwei voneinander beabstandete magnetfeldempfindliche Sensorelemente ermittelt wird, wobei der verschiebbare Körper einen permanentmagnetischen Encoder mit einer Anzahl von in Messrichtung in ihrer Polung alternierenden magnetischen Segmenten aufweist, wobei die Länge der Segmente in Verschiebungsrichtung unterschiedlich ist.

Die Erfindung geht von der Überlegung aus, dass sich die Bestimmung einer Absolutposition mit einer oben beschriebenen Sensoranordnung insbesondere dann erreichen lässt, wenn auf der signalgebenden Seite der Informationsübertragung ein Maßstab angeordnet ist, aus dem sich die Position des verschiebbaren Körpers auf der signalempfangenden Seite ableiten bzw. generieren lässt. Eine eindeutige Positionszuordnung über den magnetisierten Encoder ist dabei erreichbar, indem dessen Magnetisierungseigenschaften geeignet gewählt sind. Um den Herstellungsaufwand dabei aber dennoch gering halten zu können, sollten die Erfordernisse hinsichtlich der in den Maßstab einzuprägenden Magnetisierung begrenzt gehalten werden, so dass insbesondere eine segmentweise Ausgestaltung des Encoders beibehalten werden sollte.

Um dennoch auch bei dieser Bauweise den gewünschten Rückschluss auf eine Absolutposition zuzulassen, unterscheiden sich erfindungsgemäß die magnetisierten Segmente des Encoders voneinander in Messrichtung in ihrer Länge, so dass die Winkeldifferenz zwischen den von zwei zueinander beabstandet angeordneten magnetfeldempfindlichen Sensorelementen erfassten Magnetfeldrichtungen in eindeutiger Weise von den individuellen Segmenten des Encoders abhängt und sich somit die Position des verschiebbaren Körpers herleiten lässt. Der Längenunterschied magnetisierter Segmente kann dabei durch die Phasenbeziehung, den Frequenzunterschied oder den Amplitudenunterschied ermittelt werden, wobei die ermittelte Länge zur Identifikation des jeweiligen individuellen Segmentes und damit über dessen Positionierung im Encoder zur Ermittlung der Absolutposition herangezogen werden kann.

Die Erzeugung eines zur Position des jeweiligen Körpers proportionalen Signalwerts ist dabei auf besonders einfache Weise möglich, indem die Länge der Segmente des Encoders in Messrichtung erfindungsgemäß von Segment zu Segment derart zunimmt, dass die von den beabstandet zueinander angeordneten Sensorelementen erfasste Winkeldifferenz über die Länge des Encoders gesehen proportional mit dieser zunimmt. Insbesondere bei vergleichsweise kleinen Positionswerten kann die Länge von Segment zu Segment um einen vorgegebenen konstanten Betrag zu- oder abnehmen.

Bei einer derartigen linearen Vergrößerung des über den Encoder erzeugten Differenzsignals lassen sich durch geeignete mathematische Verknüpfung der elektrischen Sensorsignale, insbesondere durch Differenzbildung der Signale aus den einzelnen Sensorelementen, stückweise geradlinige Kennlinien der einzelnen Segmente und aus diesen besonders günstig eine der Absolutposition proportionale Information gewinnen. Die Kennlinien einzelner Segmente weisen dabei bis zur jeweiligen Segmentlänge λ/2 eine weitestgehend konstante Steigung auf.

Damit die Bestimmung der Position entlang der Hauptbewegungsrichtung des verschiebbaren Körpers von einer Bewegung um diese Hauptbewegungsrichtung unabhängig ist, ist der Encoder zweckmäßigerweise rotationssymmetrisch ausgeführt, wobei auf seinem Umfang rotationssymetrische Magnetfelder aufgebracht sind. Dadurch wird gewährleistet, dass sich das Magnetfeld des Encoders bei einer Bewegung des Encoders mit dem verschiebbaren Körper um die Hauptbewegungsachse des Encoders, die aufgrund der individuellen Anforderung vorhanden sein kann, nicht ändert. Bei einer derartigen Ausgestaltung des Encoders ist besonders die zuverlässige Funktionsfähigkeit des Systems sichergestellt, ohne dass beim Einbau des Encoders auf dessen genaue Ausrichtung oder Justierung geachtet werden müßte.

Für eine hohe Zuverlässigkeit und Beständigkeit gegenüber Umwelteinflüssen weist der Encoder vorzugsweise in Kunststoff eingebettetes Magnetmaterial auf. Dieses kann durch einen Pressvorgang oder auch durch Spritzguss hergestellt werden, wobei insbesondere Ferrit- oder auch Neodym-Eisen-Bor (NdFeB)- Materialien verwendet werden können. Bei der Herstellung wird das Material bevorzugt streifenweise mit in Messrichtung alternierender Polung magnetisiert.

Zur Messung der Magnetfelder des magnetisierten Encoders weist das jeweilige Sensorelement vorzugsweise eine Anzahl von Sensoren auf, deren Funktion vorteilhafterweise auf dem anisotropmagnetoresistiven, dem giantmagnetoresistiven oder dem Hall-Effekt basiert. Dabei können für eine hohe Auflösung magnetoresistive Widerstandsschichten mäanderförmig auf einem Siliziumträger aufgebracht sein.

Für eine einfache und genaue Ermittlung der Absolutposition des bewegbaren Körpers anhand einer Anzahl von Sensorelementsignalen wird vorzugsweise ein zur Position des verschiebbaren Körpers proportionales Ausgangssignal berechnet. Hierfür weist die Messvorrichtung vorteilhafterweise eine Auswerteeinheit auf, über die die Berechnung ausführbar ist. Als Sensorelementsignale werden vorteilhafterweise Amplituden, Frequenzen- oder Phasensignale ausgewertet.

Um ein zur Position des verschiebbaren Körper proportionales Signal zu generieren, sind eine Anzahl von Messbrücken eines Sensorelementes zweckmäßigerweise in einem Winkel von 45° zueinander angeordnet. Bei der Verwendung zweier Wheatstone-Messbrücken, die um 45° zueinander gedreht und bezüglich des verschiebbaren Körpers bzw. des Encoders an der gleichen Position angeordnet sind, lässt sich mit diesen ein sich entsprechendes sinusförmiges und cosinusförmiges elektrisches Ausgangssignal generieren.

Mit einer Kombination dieser Signale kann ein zur Position des verschiebbaren Körpers proportionales Ausgangssignal berechnet werden, indem hierfür zweckmäßigerweise eine Arcustangensfunktion verwendet wird.

Vorteilhafterweise werden bei der Berechnung des Ausgangssignals Sensorelemente verwendet, die jeweils segmentweise ein über die Länge des jeweiligen Segments stückweise linear ansteigendes Winkelsignal erzeugen. Dies ist beispielsweise erreichbar durch Verwendung von Sensorelementen der genannten Art, bei denen um 45° zueinander verdrehte Messaufnehmer zum Einsatz kommen. Diese erzeugen einerseits ein Signal proportional zum Sinus des Feldvektorwinkels und andererseits ein Signal proportional zum Cosinus des Feldvektorwinkels. Aus dem Verhältnis dieser Signale und einer anschließenden Anwendung der Arcustangensfunktion kann somit das gewünschte, stückweise über die Länge des jeweiligen Segments linear ansteigende Winkelsignal erzeugt werden.

Durch die entlang der Längsrichtung des Encoders monoton zu- oder abnehmende Länge der einzelnen Segmente ist dabei gewährleistet, dass die Differenz zwischen den von zwei beabstandet zueinander angeordneten Sensorelementen der genannten Art erzeugten Winkelsignalen eindeutig mit der Positionierung der Sensorelemente relativ zum Encoder korreliert. Vorteilhafterweise wird daher die zu ermittelnde Position anhand der Differenz der von zwei Sensorelementen erzeugten Winkelsignale ermittelt.

Die genannte Differenz kann dabei direkt zur Ermittlung der Position in der Art einer Absolutpositionsmessung herangezogen werden. Alternativ kann in vorteilhafter Weiterbildung die Positionsbestimmung aber auch in der Art einer zweistufigen Ausgestaltung vorgenommen werden, bei der in einem ersten Schritt zunächst in der Art einer Grobermittlung das aktuell von den Sensorelementen erfasste Segment bestimmt wird, wobei in einem zweiten Schritt in der Art einer Feinmessung die Positionierung des jeweiligen Sensorelements bezüglich des identifizierten Segments erfolgt. Dazu wird zweckmäßigerweise in einem ersten Auswertungsschritt die Differenz der Winkelsignale dazu herangezogen, das jeweilige Segment zu identifizieren, wobei in einem zweiten Auswertungsschritt das Winkelsignal eines der Sensorelemente dazu herangezogen wird, die Position in Relation zu dem jeweiligen Segment zu bestimmen.

Vorteilhafterweise kommt das Konzept der Nutzung eines Encoders mit in Verschiebungsrichtung unterschiedlich lang bemessenen magnetisierten Segmenten in einem Kraftfahrzeug-Sensor zum Einsatz, insbesondere als:
▪ Pedalwegsensor
▪ Speicherwegsensor in hydraulischen oder pneumatischen Speichern
▪ Stoßdämpferhöhensensor
▪ Boosterwegsensor zur Messung der Stellung des Bremskraftverstärkers
▪ Bremsbelagsverschleißanzeige
▪ Füllstandsbestimmung in Flüssigkeitstanks
▪ Positionssensor im Schiebedach
▪ Positionssensor im Cabrioverdeck
▪ Positionssensor für Fensterheber
▪ Scheinwerferposition
▪ Ermittlung der Sitzposition
▪ Lenkwinkelsensor
▪ Sensor zur Ermittlung der Kurbelwellenposition
▪ Drosselklappensensor
▪ Sensor zur Ermittlung der Ventilposition im Motor

Die Vorteile der Erfindung bestehen insbesondere darin, dass mit der beschriebenen Messvorrichtung berührungslos eine Absolutposition gemessen werden kann. Der dabei erhaltene Meßwert steht auch nach abgeschalteter Elektronik und anschließendem Wiedereinschalten unmittelbar wieder zur Verfügung, ohne dass ein externer Startwert oder eine zwischenzeitliche Abspeicherung erforderlich wären. Ein weiterer Vorteil ist, dass keine Kalibrierung der Messvorrichtung durch-geführt werden muss, und Komponenten der Messvorrichtung ohne eine erneute Kalibrierung bei Verschleiß ausgetauscht werden können. Die Meßvorrichtung ist dabei insbesondere für den Einsatz in einem Kraftfahrzeug unter den dafür relevanten Randbedingungen wie Korrosion, Verschmutzung, extreme Temperaturschwankungen bei hoher Genauigkeit und Auflösung geeignet.

Mit der Erfindung besteht weiterhin die Möglichkeit, zusätzliche Messgrößen wie die Bewegungsgeschwindigkeit, die Beschleunigung und die Bewegungsrichtung zu berechnen.

Die beschriebene Messvorrichtung weist außerdem eine sehr hohe Auflösung und Genauigkeit auf. Durch Quantisieren der einzelnen Sensorsignale lässt sich zudem auch noch eine Inkrementerfassung realisieren, bei der unter Rückgriff auf eine einmal festgestellte Absolutposition anschließend noch die weiterhin eintretenden Verschiebungen in der Art einer Nachverfolgung ermittelt oder überwacht werden.

Ein Ausführungsbeispiel der Erfindung wird anhand einer Zeichnung näher erläutert. Darin zeigen:
- Figur 1: schematisch eine Messvorrichtung zur Positionsbestimmung eines verschiebbaren Körpers,
- Figur 2: schematisch den Magnetfeldverlauf eines magnetischen Encoders und die Sensoranordnung der Messvorrichtung nach Figur 1, und
- Figur 3: den Verlauf von Sensorelementsignalen und dem Ausgangssignal A der Messvorrichtung nach Figur 1.

Gleiche Teile sind in allen Figuren mit denselben Bezugszeichen versehen.

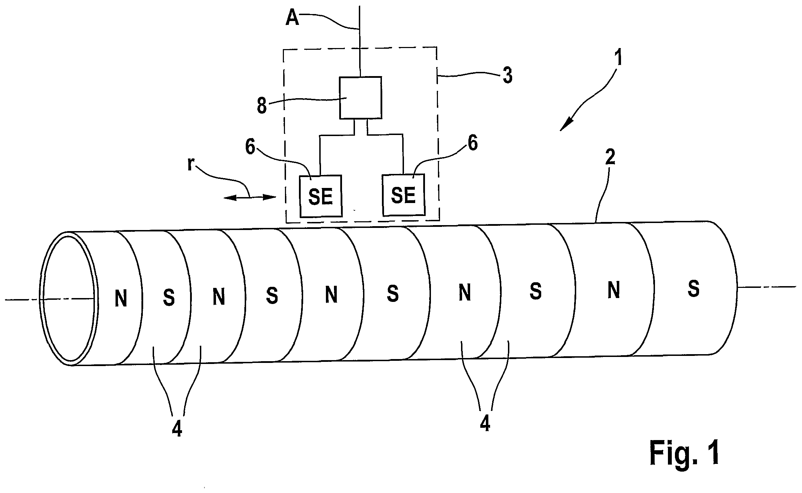

In Figur 1 ist schematisch eine Messvorrichtung 1 zur Positionsbestimmung eines verschiebbaren Körpers dargestellt. Im Ausführungsbeispiel ist der Körper nicht näher konkretisiert. Als Anwendung sind vielfältige Möglichkeiten, wie beispielsweise die Messung eines Pedalwegs, eines Speicherweges in hydraulischen oder pneumatischen Speichern, eines Stoßdämpfers, eines Boosterweges, einer Bremsbelagdicke, eines Füllstandes in Flüssigkeitstanks, der Position eines Schiebedachs oder Cabrioverdecks, die Messung zur Ermittlung einer Drosselklappenstellung oder aber andere Möglichkeiten denkbar. Dabei sind mögliche Anwendungen nicht auf den Kraftfahrzeugbereich beschränkt, jedoch besonders bevorzugt für diesen geeignet. Prinzipiell kann mit der Messvorrichtung 1 die Absolutposition s sämtlicher Körper berührungslos gemessen werden, die sich längs einer Strecke oder aber auch eines Bogens bewegen oder verschieben lassen.

Für die Encodierung der Position s eines derartigen verschiebbaren Körpers ist dieser mit einem magnetischen Encoder 2 versehen, der in Figur 1 schematisch dargestellt ist. Dieser Encoder 2 ist fest mit dem verschiebbaren Körper verbunden und bewegt sich mit diesem. Der Encoder 2 ist im Ausführungsbeispiel aus gespritztem kunststoffgebundenem Neodym-Eisen-Bor ausgeführt und weist in Messrichtung r des Körpers permanentmagnetische in ihrer Polung alternierende Segmente 4 auf. Um über das Magnetfeld der Segmente 4 des Encoders 2 die Absolutposition s des verschiebbaren Körpers messen zu können, weisen die Segmente 4 in Messrichtung r eine zunehmende Länge auf. Die Längenzunahme ist dabei derart gewählt, dass dass die von den beabstandet zueinander angeordneten Sensorelementen erfasste Winkeldifferenz über die Länge des Encoders gesehen proportional mit dieser zunimmt.

Der Encoder 2 ist im Ausführungsbeispiel rotationssymmetrisch ausgeführt, so dass eine Drehung um diese Längsachse, die in Messrichtung r verläuft, das Magnetfeld nicht beeinflusst.

Zur Messung des Magnetfeldes der Segmente 4 sind am Encoder 2 zwei Sensorelemente 6 angeordnet, aus denen über eine Auswerteeinheit 8 ein zur Position s des Encoders 2 und damit des Körpers proportionales elektrisches Ausgangssignal A berechnet wird. Die Sensorelemente 6 sind dabei in einem konstanten Abstand aₛ zueinander und bezüglich des Encoders 2 berührungslos positioniert. Dem Encoder 2 ist dabei segmentweise eine für jedes Segment 4 konstante, zwischen benachbarten Segmenten 4 alternierende Magnetisierung eingeprägt. Das durch diese Magnetisierung erzeugte Magnetfeld erzeugt bei festem Sensorabstand positionsabhängig einen von den Sensorelementen 6 erfassbaren, steigenden Differenzwinkel.

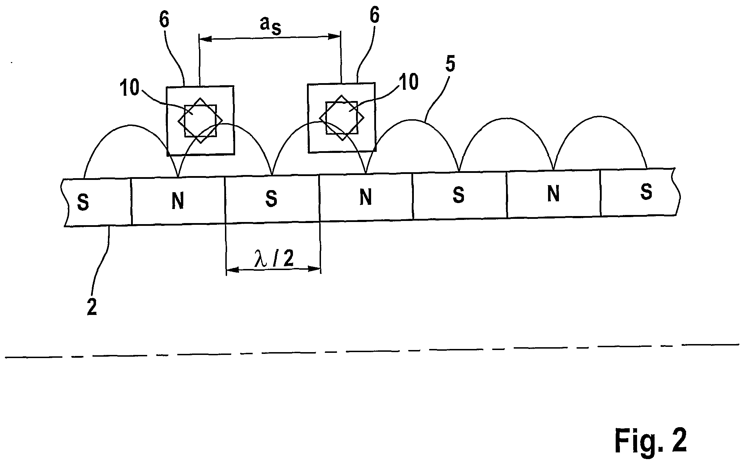

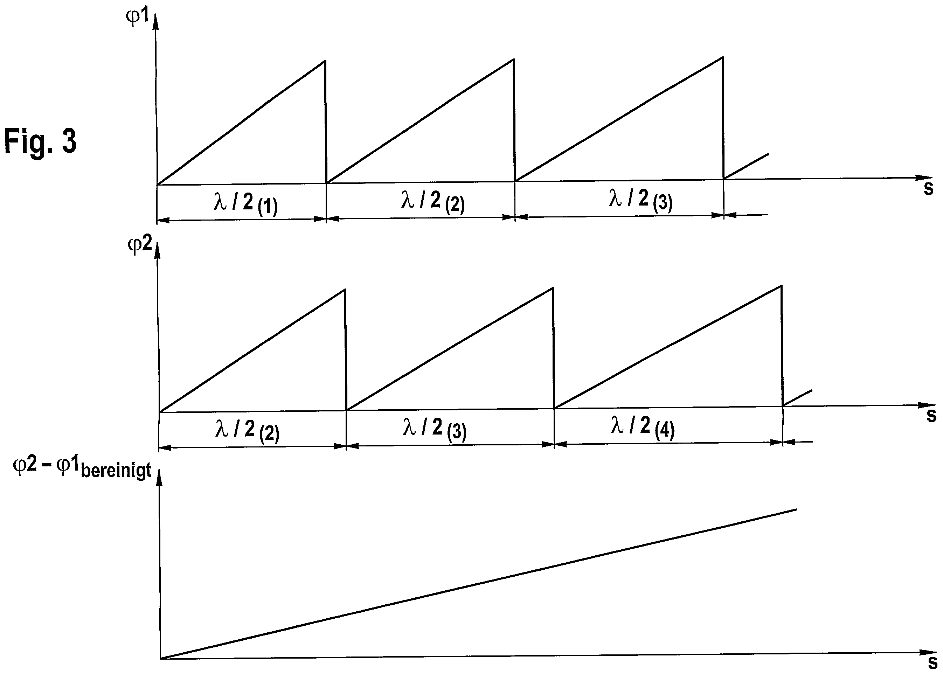

Wie in Figur 2 schematisch dargestellt ist, weisen die beiden Sensorelemente 6 jeweils zwei Wheatstone-Messbrücken 10 auf, die jeweils übereinander und um 45° zueinander verdreht angeordnet sind. Als Sensor ist in jede Wheatstone-Messbrücke 10 jeweils ein anisotroper magnetoresistiver Widerstand (AMR) geschaltet. Wegen der 45°-Verdrehung generieren die beiden Wheatstone-Messbrücken 10 eines Sensorelementes 6 bei der Verschiebung des Encoders 2 jeweils ein sinusförmiges und ein cosinusförmiges Ausgangssignal. Mit diesen beiden Signalen wird über die Steuereinheit 8 für jedes Sensorelement 6 mit einer Arcustangenfunktion eine innerhalb einer Pollänge geradlinige Kennlinie ϕ1 und ϕ2 erzeugt, die in Figur 3 dargestellt sind. Aus einem Vergleich dieser Kennlinien ϕ1 und ϕ2 wird über eine Differenzbildung ein zur Position s des verschiebbaren Körpers proportionales Ausgangssignal A berechnet. Die Sprünge der Funktionen, die bei den Segmentwechseln, also bei den Pollängen von jeweils λ/2, auftreten, können hierbei als Indexmarke genutzt werden, so dass sich die Differenz von ϕ2-ϕ1 durch eine entsprechende Interpolation um die Sprünge bereinigen lässt.

Das sich ergebende Ausgangssignal *A* = (ϕ2-ϕ1)*_{bereinigt}* ist ebenfalls in Figur 3 dargestellt. Dieses entspricht der Absolutposition.

Alternativ kann die erfasste Winkeldifferenz auch genutzt werden, um in einem ersten Auswertungsschritt das jeweils aktive Segment 4 zu identifizieren und somit eine Grobbestimmung der Position s vorzunehmen. Die anschließende Feinbestimmung der Position s kann dann anhand der Kennlinie eines der Sensorelemente 6 erfolgen.

Das dargestellte Meßprinzip ist nicht auf eine streng monotone Ortskennlinie angewiesen und kann insbesondere auch in ausgewählten Teilbereichen des Encoders in der Art einer selektiven Fokussierung besonders ausgeprägt sein, indem vorzugsweise in diesen Teilbereichen die vorgesehene Segmentierung mit positionsabhängig zunehmender Segmentlänge gewählt ist.

### Bezugszeichenliste

- 1: Messvorrichtung
- 2: Encoder
- 4: Segment
- 6: Sensorelement
- 8: Auswerteeinheit
- 10: Wheatstone-Messbrücke

- r: Messrichtung
- s: Position
- aₛ: Abstand
- A: Ausgangssignal

## Patentansprüche

1. Messvorrichtung (1) zur Messung der Absolutposition (s) mindestens zweier relativ zueinander verschiebbarer oder drehbarer Körper zueinander, bei der ein erster Körper einen permanentmagnetischen Encoder (2) mit einer Anzahl von Segmenten (4) aufweist, wobei dem Encoder (2) segmentweise eine für jedes Segment (4) konstante, zwischen benachbarten Segmenten (4) in Messrichtung (r) in ihrer Polung alternierende Magnetisierung eingeprägt ist, wobei die Länge der Segmente (4) in Messrichtung (r) unterschiedlich ist, wobei die Länge der Segmente (4) in Messrichtung (r) von Segment (4) zu Segment (4) monoton oder streng monoton zu- oder abnimmt und ein zweiter Körper mindestens zwei voneinander beabstandete magnetfeldempfindliche Sensorelemente (6)aufweist,
wobei die Messvorrichtung so
ausgebildet ist, dass aus einer Anzahl von Sensorelementsignalen mittels einer Auswerteeinheit (8) ein der Absolutposition (s) des verschiebbaren Körpers proportionales Ausgangssignal (A) berechnet wird.

2. Messvorrichtung (1) nach Anspruch 1,
bei der der Encoder (2) rotationssymmetrisch ausgeführt ist.

3. Messvorrichtung (1) nach-einem der Ansprüche 1 bis 2, bei der der Encoder (2) in Kunststoff eingebettetes Magnetmaterial aufweist.

4. Messvorrichtung nach einem der Ansprüche 1 bis 3, bei der ein Sensorelement (6) jeweils eine Anzahl von Sensoren aufweist, deren Funktion auf dem anisotropmagnetoresistiven, dem giantmagnetoresistiven oder dem Hall-Effekt basiert.

5. Messvorrichtung (1) nach einem der Ansprüche 1 bis 4, bei der eine Anzahl von Messbrücken eines Sensorelementes (6) in einem Winkel von 45° zueinander angeordnet sind.

6. Verfahren zur Bestimmung der Position (s) eines verschiebbaren
Körpers unter Verwendung einer Messvorrichtung (1) nach einem der Ansprüche 1 bis 5, wobei aus einer Anzahl von Sensorelementsignalen mittels einer Auswerteeinheit (8) ein der Absolutposition (s) des verschiebbaren Körpers proportionales Ausgangssignal (A) berechnet wird.

7. Verfahren nach Anspruch 6, bei dem als Sensorelementsignale
Amplituden-, Frequenzen- oder Phasensignale ausgewertet werden.

8. Verfahren nach Anspruch 6 oder 7, bei dem von jedem Sensorelement (6) jeweils segmentweise ein über die Länge des jeweiligen Segments (4) stückweise linear ansteigendes Winkelsignal erzeugt wird.

9. Verfahren nach Anspruch 8, bei dem die Position (s) anhand der Differenz der von zwei Sensorelementen (6) erzeugten Winkelsignale ermittelt wird.

10. Verfahren nach Anspruch 9, bei dem in einem ersten Auswertungsschritt die Differenz der Winkelsignale dazu herangezogen wird, das jeweilige Segment (4) zu identifizieren, wobei in einem zweiten Auswertungsschritt das Winkelsignal eines der Sensorelemente (6) dazu herangezogen wird, die Position (s) in Relation zu dem jeweiligen Segment (4) zu bestimmen.

## Claims

1. Measurement apparatus (1) for measuring the absolute position (s) of at least two bodies in relation to one another that are displaceable or rotatable relative to one another, wherein a first body comprises a permanent magnetic encoder (2) with a number of segments (4), wherein a magnetization that is constant for each segment (4) and alternates in terms of the polarity thereof between adjacent segments (4) in the measurement direction (r) is impressed on the encoder (2) segment by segment, wherein the length of the segments (4) in the measurement direction (r) differs, wherein the length of the segments (4) in the measurement direction (r) increases or decreases monotonically or strictly monotonically from segment (4) to segment (4) and a second body comprises at least two spaced apart magnetic-field-sensitive sensor elements (6), wherein the measurement apparatus is embodied in such a way that an output signal (A) that is proportional to the absolute position (s) of the displaceable body is calculated from a number of sensor element signals by means of an evaluation unit (8).

2. Measurement apparatus (1) according to Claim 1, wherein the encoder (2) has a rotationally symmetric embodiment.

3. Measurement apparatus (1) according to either of Claims 1 and 2, wherein the encoder (2) has magnetic material that is embedded in plastic.

4. Measurement apparatus according to any one of Claims 1 to 3, wherein a sensor element (6) in each case comprises a number of sensors, the function of which is based on the anisotropic magnetoresistive effect, the giant magnetoresistive effect or the Hall effect.

5. Measurement apparatus (1) according to any one of Claims 1 to 4, wherein a number of measuring bridges of a sensor element (6) are arranged at an angle of 45° in relation to one another.

6. Method for determining the position (s) of a displaceable body using a measurement apparatus (1) according to any one of Claims 1 to 5, wherein an output signal (A) that is proportional to the absolute position (s) of the displaceable body is calculated from a number of sensor element signals by means of an evaluation unit (8).

7. Method according to Claim 6, wherein amplitude signals, frequency signals or phase signals are evaluated as sensor element signals.

8. Method according to Claim 6 or 7, wherein an angle signal that increases linearly in a piecewise manner over the length of the respective segment (4) is respectively produced segment-by-segment by each sensor element (6).

9. Method according to Claim 8, wherein the position (s) is ascertained on the basis of the difference of the angle signals produced by two sensor elements (6).

10. Method according to Claim 9, wherein the difference of the angle signals is used in a first evaluation step to identify the respective segment (4), wherein the angle signal of one of the sensor elements (6) is used in a second evaluation step to determine the position (s) in relation to the respective segment (4).

## Revendications

1. Dispositif de mesure (1) destiné à mesurer la position absolue (s) d'au moins deux corps l'un par rapport à l'autre qui peuvent être déplacés par coulissement ou rotation de façon relative entre eux, dans lequel un premier corps présente un codeur (2) à aimantation permanente avec un certain nombre de segments (4), une magnétisation constante pour chaque segment (4), à polarisation alternée entre des segments (4) voisins dans la direction de mesure (r), étant impartie au codeur (2) par segments, la longueur des segments (4) étant différente dans la direction de mesure (r), la longueur des segments (4) augmentant ou diminuant dans la direction de mesure (r) de segment (4) à segment (4) de façon monotone ou strictement monotone, et un deuxième corps présentant au moins deux éléments de capteur (6) sensibles aux champs magnétiques, distants l'un de l'autre,
le dispositif de mesure étant constitué de telle sorte que, à partir d'un certain nombre de signaux d'éléments de capteur, un signal de sortie (A) proportionnel à la position absolue (s) du corps pouvant coulisser est calculé au moyen d'une unité d'analyse (8).

2. Dispositif de mesure (1) selon la revendication 1, dans lequel le codeur (2) est réalisé de façon symétrique en rotation.

3. Dispositif de mesure (1) selon l'une des revendications 1 à 2,
dans lequel le codeur (2) présente un matériau magnétique noyé dans une matière plastique.

4. Dispositif de mesure selon l'une des revendications 1 à 3,
dans lequel un élément de capteur (6) présente respectivement un certain nombre de capteurs dont le fonctionnement est basé sur l'effet de magnétorésistance anisotrope, l'effet magnétorésistif géant ou l'effet Hall.

5. Dispositif de mesure (1) selon l'une des revendications 1 à 4,
dans lequel un certain nombre de ponts de mesure d'un élément de capteur (6) sont disposés en formant un angle de 45° les uns par rapport aux autres.

6. Procédé destiné à définir la position (s) d'un corps pouvant coulisser en utilisant un dispositif de mesure (1) selon l'une des revendications 1 à 5, un signal de sortie (A) proportionnel à la position absolue (s) du corps pouvant coulisser étant calculé à partir d'un certain nombre de signaux d'éléments de capteur au moyen d'une unité d'analyse (8).

7. Procédé selon la revendication 6, dans lequel des signaux d'amplitude, de fréquence ou de phase sont analysés en tant que signaux d'éléments de capteur.

8. Procédé selon la revendication 6 ou 7, dans lequel chaque élément de capteur (6) produit respectivement par segments un signal angulaire qui augmente progressivement de façon linéaire sur la longueur du segment (4) respectif.

9. Procédé selon la revendication 8,
dans lequel la position (s) est déterminée à l'aide de la différence des signaux angulaires produits par deux éléments de capteur (6).

10. Procédé selon la revendication 9,
dans lequel, dans une première étape d'analyse, la différence des signaux angulaires est utilisée pour identifier le segment (4) respectif, le signal angulaire d'un des éléments de capteur (6) étant, dans une deuxième étape d'analyse, utilisé pour définir la position (s) en relation avec le segment (4) respectif.
